# EUROPEAN PATENT APPLICATION

(11) **EP 1 788 301 A2**
(43) Date of publication of application: **23.05.2007**
(21) Application number: 06255824.2
(22) Date of filing: 14.11.2006
(51) Int. Cl.: F21S 8/10, F21V 7/00, F21V 17/00

(54) **Reflectorized lamp mounting flange**

(30) Priority: 22.11.2005 US 739698 P; 09.11.2006 US 558259
(71) Applicant: Grote Industries, Inc., Madison, Indiana 47250 (US)
(72) Inventor: Smith, Eaton R., Hanover Indiana 47243 (US); Metzger, Dean, Fort Wayne Indiana 46815 (US)
(74) Representative: Tomkinson, Alexandra

(57) **Abstract**

A reflectorized lighting device is disclosed having a flange (55) that at least partially surrounds the periphery of the reflectorized lighting device. The reflectorized lighting device can have an aperture (60) adapted to receive a light source. The flange (55) can be adapted to receive a reflector (256). The reflector can be received by the flange (55) and can at least partially surround the periphery of the aperture (60). The reflector (256) can be integrally formed with the flange (55), light source, or housing (50). The flange (55) can be integrally formed with the housing (50), light source, or reflector (256). The light source can be integrally formed with the housing (50), flange (55), or reflector (256). The reflectorized lighting device can be used to retrofit existing vehicles or can be used on newly manufactured vehicles.

## Description

### CROSS-REFERENCE TO RELATED APPLICATIONS

The present application claims the benefit of United States Provisional Patent Application Serial No. 60/739,698, filed November 22, 2005 and entitled Reflectorized Lamp Mounting Flange / Housing, the text and drawings of which are hereby incorporated by reference in their entireties.

### FIELD OF THE INVENTION

The present invention resides generally in the field of transportation, and in a particular aspect relates to the illumination of vehicles.

### BACKGROUND

Many governments throughout the world prescribe regulations pertaining to illumination and reflector requirements for different types of mobile vehicles. The regulations specify requirements such as luminescence, size, shape, color, and reflectivity, among others. In addition, the requirements often vary depending on the type and size of vehicle. Examples of such regulations may be found in the United States Code of Federal Regulations at 49 C.F.R. § 571.108, also known as the Federal Motor Vehicle Safety Standards (FMVSS). As is true in many countries, the governmental regulations are ordinarily complied with by different entities such as, but not limited to: those who manufacture lighting and reflector systems; those who manufacture mobile vehicles; those who refurbish and/or repair mobile vehicles; and those who operate mobile vehicles.

Lighting systems can be designed and manufactured with little thought to reflector systems. The converse is also true: reflector systems can be designed and manufactured with little thought to lighting systems. Given the pervasive nature of the regulations and those entities that the regulations impact, there is a continuing need for improved lighting and reflector devices.

In view of this background, the need remains for improved devices for lighting devices and reflector devices capable of cooperating together. The present invention is addressed to these needs.

### SUMMARY

Accordingly, in certain aspects, disclosed embodiments provide novel arrangements for illuminating mobile vehicles. The novel arrangements involve the use of reflector systems and lighting systems adapted to coact with one another.

Accordingly, in one aspect, certain embodiments provide reflector-lighting systems having a light source and a reflex reflector at least partially enveloping the periphery of the light source.

In another aspect, certain embodiments provide reflector-lighting systems having a light source with a surface that defines a periphery. A reflex reflector is sized to at least partially coact with the periphery of the light source surface.

In a further aspect, certain embodiments provide reflector-lighting systems having a light source with a surface that defines a periphery. A reflex reflector having an aperture is sized to at least partially coact with the periphery of the light source surface. The aperture permits passage of light emitted from the light source.

In still another aspect, certain embodiments provide reflector-lighting systems having a light source with a surface that defines a periphery, as well as having a substantially planar reflex reflector. The surface of the reflex reflector at least partially coacting with the light source surface.

In another aspect, certain embodiments provide reflector-lighting systems having a light source with a surface that defmes a light source periphery and a substantially planar reflex reflector having an aperture. The reflex reflector has an inner periphery defined by the aperture. The reflex reflector inner periphery at least partially coacts with the light source periphery.

In a further aspect, certain embodiments provide reflector-lighting systems having a light source, a housing sized to receive the light source, and a reflex reflector attached to the housing.

In still another aspect, certain embodiments provide reflector-lighting systems having a light source, a housing sized to receive the light source where the housing has a flange, and a reflex reflector attached to the housing flange.

In still another aspect, certain embodiments provide reflector-lighting systems having a light source and a housing sized to receive the light source where the housing has a flange. The flange of the housing is configured as a reflex reflector.

In a further aspect, certain embodiments provide kits having a light source housing having a periphery and a reflex reflector adapted to be received at least partially around the periphery of the light source housing.

In a further aspect, certain embodiments provide kits having a light source housing integrally formed with a reflector.

In a further aspect, certain embodiments provide kits having a light source housing integrally formed with a lamp thereby forming a unit. A reflector can be adapted to be received by the unit and is positioned around the periphery of the unit.

In a further aspect, certain embodiments provide kits having a reflector integrally formed with a lamp thereby forming a unit. The reflector can be positioned around the periphery of the unit.

In a further aspect, certain embodiments provide kits having a reflector and a flange capable of receiving the reflector. The flange can be capable of mounting to a light source housing.

In a further aspect, certain embodiments provide kits having a reflector and a flange capable of receiving the reflector. The flange can be capable of mounting to a lamp.

In a further aspect, certain embodiments provide kits having a reflector capable of being received by a light source housing flange.

In a further aspect, certain embodiments provide kits having a reflector capable of being received by a lamp.

In a further aspect, certain embodiments provide kits having a light source housing having a flange. The light source housing can be capable of receiving a lamp. The flange can be capable of receiving a reflector.

In still another aspect, certain embodiments provide kits having a light source having a periphery, a light source adapted to be received within a light source housing, and a reflex reflector adapted to be received at least partially around the periphery of the light source housing.

In still another aspect, certain embodiments provide methods of making reflector-lighting systems by orienting a light source and installing a reflex reflector at least partially around the periphery of the light source.

In still another aspect, certain embodiments provide methods of making reflector-lighting systems by orienting a light source housing, connecting a light source to the light source housing, and installing a reflex reflector at least partially around the periphery of the light source housing.

In still another aspect, certain embodiments provide methods of installing reflector-lighting systems by mounting a light source on a vehicle and installing a reflex reflector at least partially around the periphery of the light source.

In still another aspect, certain embodiments provide methods of installing reflector-lighting systems by mounting a light source housing on a vehicle, connecting a light source to the light source housing, and installing a reflex reflector at least partially around the periphery of the light source.

In still another aspect, certain embodiments provide methods of retrofitting reflector-lighting systems by removing existing lighting systems from vehicles, replacing the existing systems with light sources and installing reflex reflectors at least partially around the periphery of the light sources.

In still another aspect, certain embodiments provide methods of retrofitting reflector-lighting systems by removing existing lighting systems, replacing the existing lighting systems with light source housings, connecting light sources to the light source housings, and installing reflex reflectors at least partially around the periphery of the light source housings.

The disclosed embodiments provide lighting systems and reflector systems that coact. Additional embodiments as well as features and advantages of the invention will be apparent from the further descriptions herein.

### BRIEF DESCRIPTION OF THE DRAWINGS

Although the characteristic features of this invention will be particularly pointed out in the claims, the invention itself, and the manner in which it may be made and used, may be better understood by referring to the following description taken in connection with the accompanying figures forming a part thereof.
FIG. 1 is a perspective view of one embodiment of a reflectorized light housing.
FIG. 2 is a perspective view of one embodiment of a reflectorized lamp.
FIG. 3 is a perspective view of one embodiment of a reflectorized light housing.
FIG. 4 is a perspective view of one embodiment of a reflectorized light housing.
FIG. 5 is partial cross-sectional view of one embodiment of a reflectorized lamp.

### DETAILED DESCRIPTION

For the purposes of promoting an understanding of the principles of the invention, reference will now be made to the embodiments illustrated in the drawings and specific language will be used to describe the same. It will nevertheless be understood that no limitation of the scope of the invention is thereby intended, and alterations and modifications in the illustrated devices, and further applications of the principles of the invention as illustrated therein are herein contemplated as would normally occur to one skilled in the art to which the invention relates.

As described above, certain embodiments of the present invention provide novel arrangements for illuminating mobile vehicles. As used herein, the term "mobile vehicles" includes, but is not limited to, passenger cars, trucks, buses, tractors, trailers, heavy equipment, marine craft, aircraft, etc. Also as used herein, the term "reflector" includes, but is not limited to, reflective sheeting, reflective materials, reflective machined materials, reflex reflectors, etc. The term "reflex reflector" can include, among other things, a reflector that is covered and sealed from the atmosphere providing a hermetic seal which is a requirement for reflex reflectors used in Europe and those countries that subscribe to the European requirements.

The Federal Motor Vehicle Safety Standard in Part 571.108 of the Code of Federal Regulation Title 49 specify that vehicles over 2032 mm wide are required to have stop lamp with a lens area (Effective Projected Luminous Lens Area (EPLLA)) of at least 75 square centimeters. A stop lamp used on a large trailer today will be approximately 10 cm in diameter or about 78.5 square cm of area. If the reflex reflector is included in the lens, it cannot be counted into the calculation of the EPLLA, therefore the lamp would not comply with FMVSS-108. The reflex portion of the lens is approximately 13 square cm leaving only 65 square cm of EPLLA. Many of the lamps used on these vehicles are snapped into a grommet or flange that holds the lamp in place.

Although a reflex reflector can be combined with a lens, minimum FMVSS requirements for lens area require that the area of the lens covered by the reflex reflector not be included. Thus, if a reflex reflector were integrated into the lens, the lens diameter would necessarily increase so as to ensure a minimum lens area that is free of the reflex reflector.

Certain embodiments of the present invention combine the reflex reflector into the mounting flange. The flange can be manufactured as a separate part or in conjunction with the lamp housing. This invention is not limited to stop lamps, but may be used for side marker lamps, turn signal lamps, clearance lamps, and tail lamps or wherever reflex reflectors are required.

Current 100 mm diameter and oval style lamps, non-stud mounted lamps as an example require a flange or grommet mounting adaptor. For vehicles over 2032 mm in width a minimum of 75 cm sq. of optic area is also required. FMVSS also requires a reflex reflector per side.

By combining the reflex reflector into the mounting flange all legal requirements are fulfilled. The flange can be sealed to protect the reflex reflector by means of a sealing disk or gasket, resulting in a reduction of 33% to 50% of the components, thus reducing the space requirements and assembly time during construction of the vehicle. The combination eliminates the need to install separate reflex reflectors on the vehicle.

One embodiment provides for a light housing device adapted to receive a light source and having a flange that at least partially surrounds the periphery of the light housing. The flange is adapted to receive a reflector thereon.

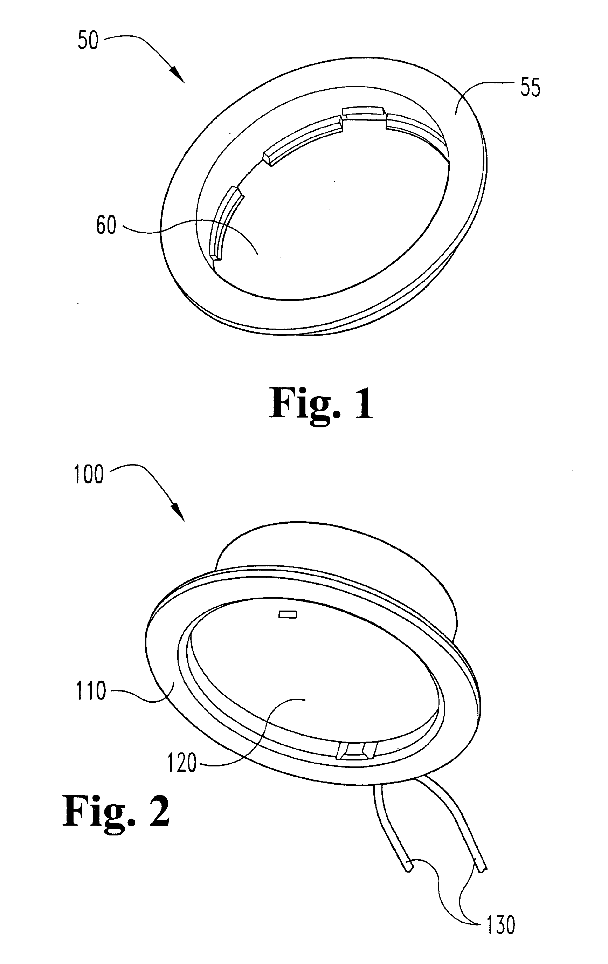

Turning now to the figures, FIG. 1 shows one embodiment of a 4" reflectorized light housing shown generally at 50. The reflectorized light housing 50 is useful in stop lights, tail lights, or turn lights, for example. The reflectorized light housing has mounting flange 55 that is adapted to receive a reflector, such as a reflex reflector. Reflectorized light housing 50 has an aperture 60 sized to accommodate a light source.

FIG. 2 shows another embodiment of a 4" reflectorized lamp shown generally at 100. The reflectorized lamp 100 is useful in stop lights, tail lights, or turn lights, for example. Mounting flange 110 is adapted to receive a reflector, such as a reflex reflector, and light source 120 is shown installed in the reflectorized lamp 100. Electrical cabling 130 are used to provide power to the reflectorized lamp 100.

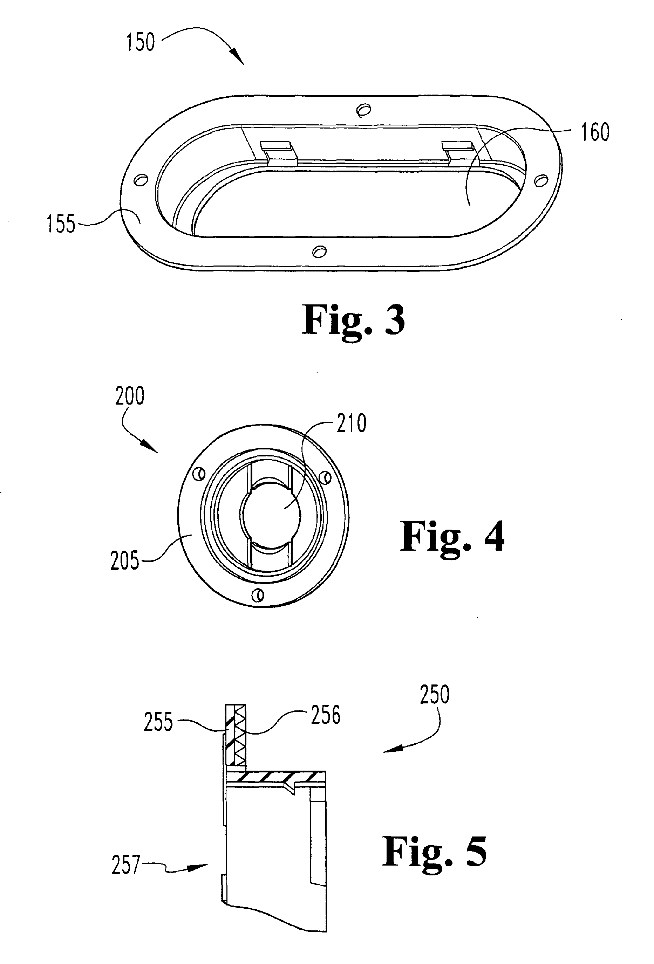

FIG. 3 shows yet another embodiment of an oval reflectorized light housing shown generally at 150. The reflectorized light housing 150 is useful as a stop light, tail light, or turn light, for example. The reflectorized light housing 150 is oval in appearance and has flange 155 adapted to receive a reflector, such as a reflex reflector. Aperture 160 is adapted to receive a light source.

FIG. 4 shows another embodiment of a 2 & 2 ½" reflectorized light housing shown generally at 200. The reflectorized light housing 200 is useful for a 2" and 2 ½" marker light for a heavy duty truck, for example. Flange 205 is adapted to receive a reflector, such as a reflex reflector, and aperture 210 is adapted to receive a light source.

FIG. 5 is a side cutaway view of a reflectorized lamp 250. Flange 255 incorporates a reflex reflector 256 thereon. The aperture 257 is adapted to receive a light source.

In some embodiments the reflector can be applied directly to the housing or integrally formed in the housing.

In other embodiments, the housing and lamp can be integrally formed thus requiring a separate flange to mount the reflector.

In still another embodiment, the lamp and flange can be integrally formed thus requiring a separate housing.

In yet further embodiments, the lamp, housing and flange can all be integrally combined.

It will be understood by those skilled in the art that the combinations of light source and reflectors can be packaged into kits sold and/or marketed in retail outlets, wholesale outlets, as well as sold and/or marketed over the phone, television, internet, or any other remote types of marketing and sales. It will also be understood that such combinations can be used to retrofit existing vehicles, or install kits onto newly manufactured vehicles.

While the invention has been illustrated and described in detail in the drawings and foregoing description, the same is to be considered as illustrative and not restrictive in character. Only certain embodiments have been shown and described, and all changes, equivalents, and modifications that come within the spirit of the invention described herein are desired to be protected. Any experiments, experimental examples, or experimental results provided herein are intended to be illustrative of the present invention and should not be considered limiting or restrictive with regard to the invention scope. Further, any theory, mechanism of operation, proof, or finding stated herein is meant to further enhance understanding of the present invention and is not intended to limit the present invention in any way to such theory, mechanism of operation, proof, or finding. Thus, the specifics of this description and the attached drawings should not be interpreted to limit the scope of this invention to the specifics thereof. Rather, the scope of this invention should be evaluated with reference to the claims appended hereto. In reading the claims it is intended that when words such as "a", "an", "at least one", and "at least a portion" are used there is no intention to limit the claims to only one item unless specifically stated to the contrary in the claims. Further, when the language "at least a portion" and/or "a portion" is used, the claims may include a portion and/or the entire items unless specifically stated to the contrary. Finally, all publications, patents, and patent applications cited in this specification are herein incorporated by reference to the extent not inconsistent with the present disclosure as if each were specifically and individually indicated to be incorporated by reference and set forth in its entirety herein.

## Claims

1. A reflectorized lamp, comprising:
a light source; and
a reflector at least partially enveloping the periphery of the light source.

2. A reflectorized lamp, comprising:
a light source having a surface, the surface defining a light source periphery; and
a reflector, the reflector forming an aperture, the reflector being substantially planar and having an inner reflector periphery defined by the aperture and an outer reflector periphery, the inner reflector periphery at least partially coacting with the light source periphery.

3. A reflectorized lamp, comprising:
a light source;
a housing sized to receive the light source, the housing having a flange; and
a reflector, the reflector connected to the housing flange.

4. The reflectorized lamp of claim(s) 1, 2, or 3, wherein the reflector has a minimum surface area of 13 square cm.

5. The reflectorized lamp of claims 1, 2, or 3, wherein the reflector has a minimum surface area sufficient to satisfy Federal Motor Vehicle Safety Standards.

6. A reflectorized lamp kit, comprising:
a light source housing having a periphery; and
a reflector adapted to be received at least partially around the periphery of the light source housing.

7. A reflectorized kit for use with a light source housing and lamp, comprising:
a reflector; and
a flange capable of receiving the reflector, the flange capable of mounting to the light source housing.

8. A reflectorized lamp kit, the kit comprising:
a light source housing having a periphery;
a light source adapted to be received by the light source housing; and
a reflector adapted to be received at least partially around the periphery of the light source housing.

9. A method of making a reflectorized lamp, the method comprising:
orienting a light source; and
installing a reflector at least partially around the periphery of the light source.

10. A method of retrofitting a lamp and reflector system, the method comprising:
removing an existing lighting system from a vehicle;
replacing the existing lighting system with a light source; and
installing a reflector at least partially around the periphery of the light source.
